# EUROPEAN PATENT APPLICATION

(11) **EP 2 789 231 A1**
(43) Date of publication of application: **15.10.2014**
(21) Application number: 14163260.4
(22) Date of filing: 02.04.2014
(51) Int. Cl.: A01M 7/00, B60W 50/00

(54) **System and method for configuring an agricultural vehicle**

(30) Priority: 09.04.2013 US 201313859306
(71) Applicant: DEERE & COMPANY, Moline, Illinois 61265-8098 (US)
(72) Inventor: Reising, Robert J, Des Moines, IA Iowa 50322 (US); Hitchler, Bradley J, Baxter, IA Iowa 50028 (US); Royal, Adam J, Ankeny, IA Iowa 50034 (US); Baxter, Garry E, Ankeny, IA Iowa 50023 (US); Lorentzen, Robert E, Bondurant, IA Iowa 50035 (US); Klemme, Kent A, Ankeny, IA Iowa 50021 (US); Gardner, Michael L, Ankeny, IA Iowa 50023-9779 (US)
(74) Representative: Reichert, Christian

(57) **Abstract**

An agricultural vehicle (10) is proposed. The vehicle (10) comprises: a feature (65); an electronic tag (70) coupleable to the feature (65); a system comprising a reader (90) in communication with the electronic tag (70), the reader (90) configured to perform at least one of detecting a presence of the electronic tag (70), detecting an absence of the electronic tag (70), and receiving a feature data (95) communicated by the electronic tag (70), and a processor (105) in communication with the reader (90), the processor (105) operable to configure the agricultural vehicle (10) based on at least one of the presence of the electronic tag (70), the absence of the electronic tag (70), and the feature data (95). Further, a method for configuring an agricultural vehicle (10) is proposed.

## Description

The present disclosure generally relates to an agricultural vehicle, and more particularly to a system for configuring agricultural vehicles. Further, a method for configuring an agricultural vehicle is disclosed.

In order to configure an agricultural vehicle comprising various features, the agricultural vehicles commonly include software that requires software updates depending on the features installed. Updating the software is commonly a manual process.

It is therefore an object of the invention to facilitate the configuration process of an agricultural vehicle.

The object will be achieved by the teaching of claims 1 and 12. Advantageous solutions are described in the subclaims.

Accordingly an agricultural vehicle comprises: a feature; an electronic tag coupleable to the feature; a system comprising a reader in communication with the electronic tag, the reader configured to perform at least one of detecting a presence of the electronic tag, detecting an absence of the electronic tag, and receiving a feature data communicated by the electronic tag, and a processor in communication with the reader, the processor operable to configure the agricultural vehicle based on at least one of the presence of the electronic tag, the absence of the electronic tag, and the feature data.

The electronic tag may comprise a RFID tag and the reader a RFID reader. The RFID tag may comprises a RFID antenna. The feature may comprise a wheel and the feature data may communicate at least one of a width of the wheel and a diameter of the wheel. The processor might be operable to configure the vehicle by optimizing a wheel spacing to prevent the wheel from contacting at least one of a frame of the vehicle and a fender of the vehicle. Further the processor might be operable to configure the agricultural vehicle by optimizing a logic circuitry configuration of the agricultural vehicle. The processor might be further operable to configure the agricultural vehicle to achieve at least one of a desired performance and an optimized performance. The performance is provided via at least one of a user input and a memory and further, the processor may be operable to communicate via a user output.

In a further embodiment the feature may comprise a tank and the feature data communicates a volume of the tank. Further, the feature may be a boom and the feature data communicates a length of the boom.

In another embodiment, a method for configuring a vehicle is disclosed. The vehicle comprises a feature. An electronic tag is coupleable to the feature. The method comprises providing a reader in communication with the electronic tag. The reader is configured to perform at least one of detecting a presence of the electronic tag, detecting an absence of the electronic tag, and receiving a feature data communicated by the electronic tag. The method comprises communicating with the reader using a processor and configuring the vehicle based on at least one of the presence of the electronic tag, the absence of the electronic tag, and the feature data.

Other features and aspects will become apparent by consideration of the detailed description and accompanying drawings.
FIG. 1 is a side view of a vehicle according to one embodiment.
FIG. 2 is a front view of the vehicle of FIG. 1.
FIG. 3 is a schematic of an illustrative system for configuring a vehicle.
FIG. 4 is a schematic of an illustrative system of another embodiment for configuring a vehicle.

Before any embodiments are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Further embodiments of the invention may include any combination of features from one or more dependent claims, and such features may be incorporated, collectively or separately, into any independent claim.

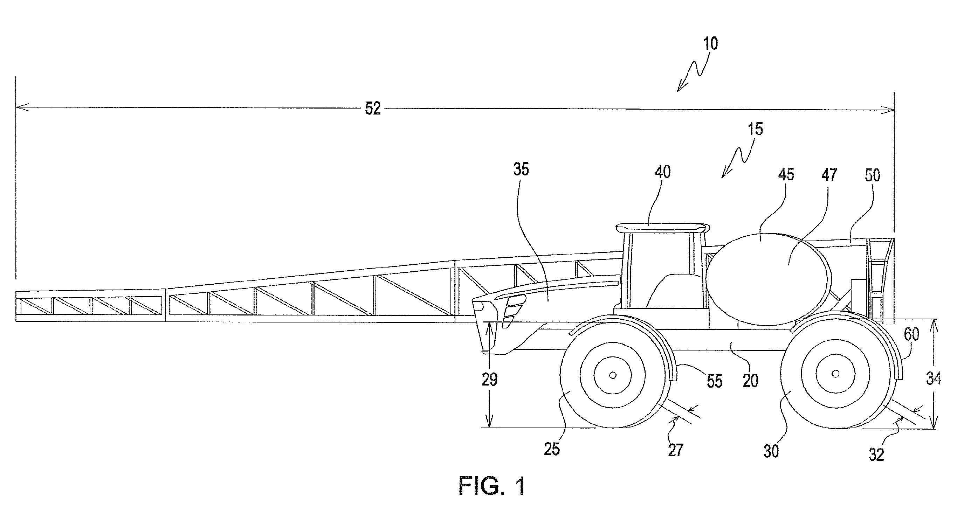

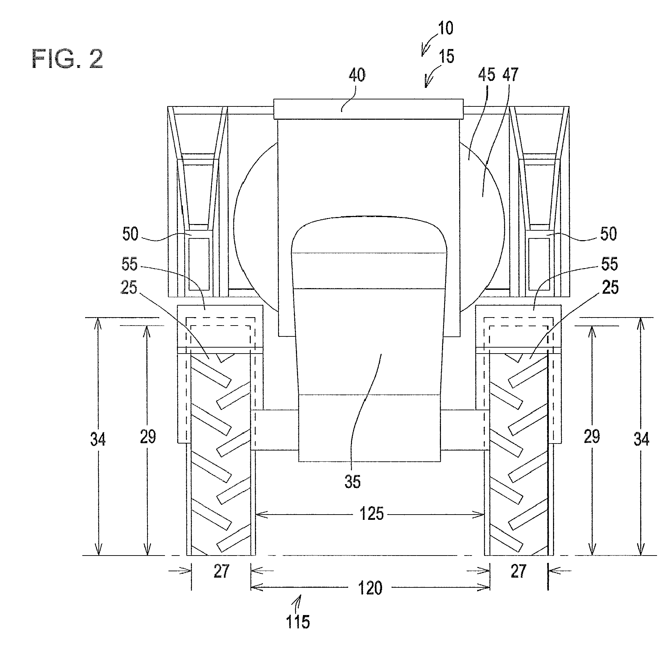

FIGS. 1 and 2 illustrate a vehicle 10. The illustrated vehicle 10 is an agricultural vehicle 15 configured for spraying crops. Other types of vehicles 10 are contemplated by this disclosure (e.g., on-road vehicles). The agricultural vehicle 15 comprises a frame 20. The frame 20 is supported by at least one front wheel 25. The front wheel 25 comprises a front wheel width 27 and a front wheel diameter 29. The frame is also supported by at least one rear wheel 30. The rear wheel 30 comprises a rear wheel width 32 and a rear wheel diameter 34. A hood 35 is coupleable to the frame 20. An operator station 40 is also coupleable to the frame 20. A tank 45 comprising a volume 47 for storing a treatment (e.g., chemical) to be dispensed is coupleable to the frame 20. A boom 50 comprising a length 52 is coupleable to the frame 20 and configured for dispensing the treatment. At least one front fender 55 is coupleable to the frame 20 adjacent the front wheel 25. At least one rear fender 60 is coupleable to the frame 20 adjacent the rear wheel 30.

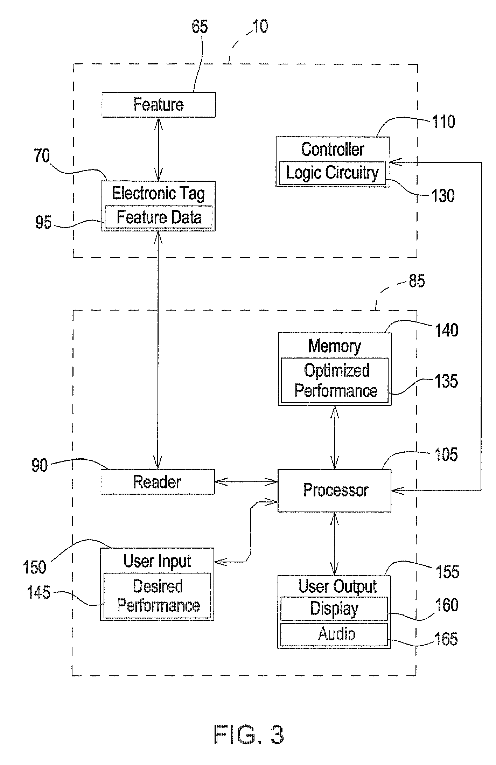

With reference to FIG. 3, the vehicle 10 comprises a feature 65. The feature 65 may be any aspect of the vehicle 10 that may be removed and/or replaced with an alternate aspect that may require the vehicle 10 to function in another manner. For example, the illustrated feature 65 may be the front wheel 25, the rear wheel 30, the tank 45, or the boom 50 of the agricultural vehicle 15 of FIGS. 1 and 2. Alternate front wheels 25 may have different front wheel widths 27 and/or different front wheel diameters 29. Alternate rear wheels 30 may have different rear wheel widths 32 and/or different rear wheel diameters 34. Alternate tanks 45 may have different volumes 47. Alternate booms 50 may have different lengths 52. Other features 65 are contemplated by this disclosure (e.g., engine).

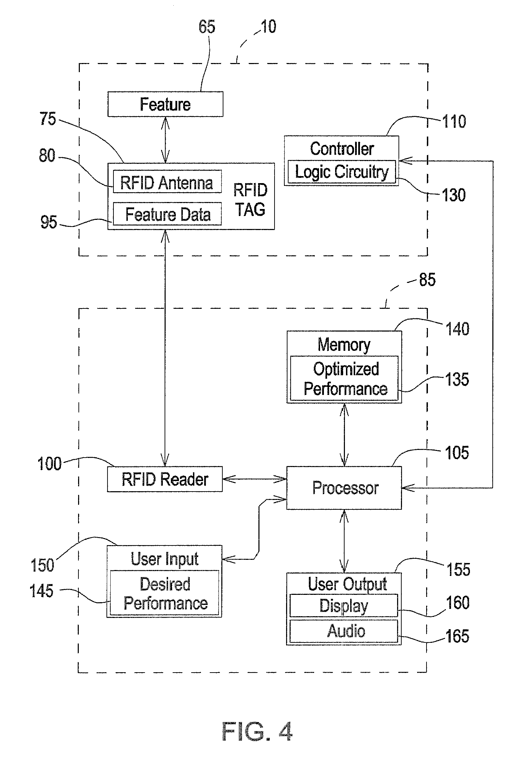

Referring to FIG. 3, an electronic tag 70 is coupleable to the feature 65. With reference to FIG. 4, the illustrated electronic tag 70 is a RFID tag 75. The RFID tag 75 may be an active tag that includes an internal power source or a passive tag that is energized by a field created by an RFID reader. The RFID tag 75 may comprise a RFID antenna 80.

With reference to FIG. 3, a system 85 for configuring the vehicle 10 comprises a reader 90. The reader 90 is in communication with the electronic tag 70. The reader 90 is configured to perform at least one of detecting a presence of the electronic tag 70, detecting an absence of the electronic tag 70, and receiving a feature data 95 communicated by the electronic tag 70. Referring to FIG. 4, the illustrated reader 90 is a RFID reader 100.

With reference to FIG. 3, the system 85 comprises a processor 105. The processor 105 is in communication with the reader 90 and operable to configure the vehicle 10 by communicating with a controller 110 coupled to the vehicle 10. The processor 105 configures the vehicle 10 based on at least one of the presence of the electronic tag 70, the absence of the electronic tag 70, and the feature data 95. Illustratively, the processor 105 is operable to configure the vehicle 10 by optimizing a wheel spacing 115 (FIG. 2), such as a front wheel spacing 120, to prevent the front wheels 25 from contacting at least one of the frame 20 and the front fenders 55. Alternatively, the processor 105 is operable to configure the vehicle 10 by optimizing a rear wheel spacing 125 to prevent the rear wheels 30 from contacting at least one of the frame 20 and the rear fenders 60. This disclosure also contemplates optimizing spacing between the front wheels 25 and the front fenders 55 and a spacing between the rear wheels 30 and the rear fenders 60.

The processor 105 is operable to configure the vehicle 10 by optimizing a configuration of a logic circuitry 130 of the controller 110 to achieve an optimized performance 135 that may be stored in a memory 140. Alternatively, the processor 105 is operable to configure the vehicle 10 to achieve a desired performance 145 provided via a user input 150 (e.g., keyboard, touch screen, voice recognition) or stored in the memory 140.

The optimized performance 135 and the desired performance may be communicated to an operator via a user output 155. The user output 155 may be a display 160, an audio device 165, or other device.

In operation, the electronic tag 70 may be coupled to the feature 65. The reader 90 communicates with the electronic tag 70 if it is coupled to the feature 65. The reader 90 performs at least one of detecting a presence of the electronic tag 70, detecting an absence of the electronic tag 70, and receiving a feature data 95 communicated by the electronic tag 70. The processor 105 communicates with the reader 90 and configures the vehicle 10 based on at least one of the presence of the electronic tag 70, the absence of the electronic tag 70, and the feature data 95. For example, if a front wheel 25 of a given front wheel width 27 is replaced by a front wheel 25 having a front wheel width 27 that is greater, the front wheel spacing 120 may have to be changed in order to minimize the front wheel 25 contact with the frame 20 and yet not protrude outside the front fender 55 excessively. Alternatively, if a front wheel 25 of a given front wheel diameter 29 is replaced by a front wheel 25 having a front wheel diameter 29 that is greater, the front wheel spacing 120 or the spacing between the front wheel 25 and the front fender 55, may have to be changed in order to minimize the front wheel 25 contact with the frame 20 or the front fender 55.

## Claims

1. An agricultural vehicle (10) comprising: a feature (65); an electronic tag (70) coupleable to the feature (65); a system comprising a reader (90) in communication with the electronic tag (70), the reader (90) configured to perform at least one of detecting a presence of the electronic tag (70), detecting an absence of the electronic tag (70), and receiving a feature data (95) communicated by the electronic tag (70), and a processor (105) in communication with the reader (90), the processor (105) operable to configure the agricultural vehicle (10) based on at least one of the presence of the electronic tag (70), the absence of the electronic tag (70), and the feature data (95).

2. The agricultural vehicle (10) of claim 1, wherein the electronic tag (70) is a RFID tag (75) and the reader (90) is a RFID reader (100).

3. The agricultural vehicle (10) of claim 2, wherein the RFID tag (75) comprises a RFID antenna (80).

4. The agricultural vehicle (10) of one of the foregoing claims, wherein the feature (65) is a wheel (25, 30) and the feature data (95) communicates at least one of a width (27, 32) of the wheel (25, 30) and a diameter (29, 34) of the wheel (25, 30).

5. The agricultural vehicle (10) of claim 4, wherein the processor (105) is operable to configure the vehicle (10) by optimizing a wheel spacing (115, 120, 125) to prevent the wheel (25, 30) from contacting at least one of a frame (20) of the vehicle (10) and a fender (55, 60) of the vehicle (10).

6. The agricultural vehicle (10) of one of the foregoing claims, wherein the processor (105) is operable to configure the agricultural vehicle (10) by optimizing a logic circuitry (130) configuration of the agricultural vehicle (10).

7. The agricultural vehicle (10) of one of the foregoing claims, wherein the processor (105) is operable to configure the agricultural vehicle (10) to achieve at least one of a desired performance (145) and an optimized performance (135).

8. The agricultural vehicle (10) of claim 7, wherein the desired performance (145) is provided via at least one of a user input (150) and a memory (140).

9. The agricultural vehicle (10) of one of the foregoing claims, wherein the processor (105) is operable to communicate via a user output (155).

10. The agricultural vehicle (10) of one of the claims 1 to 3 and 6 to 9, wherein the feature (65) is a tank (45) and the feature data (95) communicates a volume (47) of the tank (45).

11. The agricultural vehicle (10) of one of the claims 1 to 3 and 6 to 9, wherein the feature (65) is a boom (50) and the feature data (95) communicates a length (52) of the boom (50).

12. A method for configuring an agricultural vehicle (10) according to one of the claims 1 to 11, the method comprising: providing the reader (90) in communication with the electronic tag (70), the reader (90) configured to perform at least one of: detecting a presence of the electronic tag (70), detecting an absence of the electronic tag (70), and receiving the feature data (95) communicated by the electronic tag (70); communicating with the reader (90) using the processor (105); and configuring the vehicle (10) based on at least one of the presence of the electronic tag (70), the absence of the electronic tag (70), and the feature data (95).
